# EUROPÄISCHE PATENTSCHRIFT

(11) **EP 3 420 311 B1**
(45) Veröffentlichungstag und Bekanntmachung des Hinweises auf die Patenterteilung: **01.12.2021**
(21) Anmeldenummer: 17706220.5
(22) Anmeldetag: 17.02.2017
(51) Int. Cl.: G01C 21/20, B63B 49/00, G02B 30/27

(54) **VORRICHTUNG ZUR INTEGRIERTEN DARSTELLUNG VON INFORMATIONEN AUF EINEM WASSERFAHRZEUG**
DEVICE FOR THE INTEGRATED DISPLAY OF INFORMATION ON A WATERCRAFT
DISPOSITIF DE REPRÉSENTATION INTÉGRÉE D'INFORMATIONS SUR UN VÉHICULE NAUTIQUE

(30) Priorität: 23.02.2016 DE 102016202781
(43) Veröffentlichungstag der Anmeldung: 02.01.2019
(73) Patentinhaber: thyssenkrupp Marine Systems GmbH, 24143 Kiel (DE); thyssenkrupp AG, 45143 Essen (DE)
(72) Erfinder: MUNDE, Robert, 24111 Kiel (DE); SCHRÖTER, André, 24109 Kiel (DE); LAUBE, Christian, 24644 Timmaspe (DE)
(74) Vertreter: thyssenkrupp Intellectual Property GmbH
(86) Internationale Anmeldenummer: PCT/EP2017/053694
(87) Internationale Veröffentlichungsnummer: WO 2017/144377

(56) Entgegenhaltungen:
- EP-A2- 2 070 068
- JP-B2- 3 045 625
- US-A1- 2005 261 844
- US-A1- 2007 244 642
- US-A1- 2011 025 684
- US-A1- 2012 290 200
- US-B1- 6 466 891
- US-B1- 7 143 363
- US-B2- 7 099 755
- SOLTAN P ET AL: "IMPROVED SECOND-GENERATION 3-D VOLUMETRIC DISPLAY SYSTEM, PASSAGE", IMPROVED SEOND-GENERATION 3-D VOLUMETRIC DISPLAY SYSTEM, XX, XX, 1. Oktober 1998 (1998-10-01), Seiten 1-268, XP001090923,
- Louis Caccetta ET AL: "Effective Algorithms for a Class of Discrete Valued Optimal Control Problems" In: "Optimization and Cooperative Control Strategies", 1 January 2009 (2009-01-01), Springer-Verlag Berlin Heidelberg, XP055467653, pages 1-30,

## Beschreibung

Die Erfindung betrifft eine Vorrichtung zur integrierten Darstellung von Informationen auf einem Wasserfahrzeug. Üblicherweise werden Teilinformationen an verschiedenen Stationen erfasst, dargestellt und durch eine zuständige Person ausgewertet. Die das Schiff kommandierende Person wird durch die zuständigen Personen informiert bzw. informiert sich an den verschiedenen Stationen. Das Gesamtbild der Situation entsteht daher erst bei der kommandierenden Person.

Aus der DE 10 2009 022 652 A1 ist ein Assistenzsystem zur Steuerung eines Schiffes mit GPS-Einrichtung bekannt.

Aus der DE 10 2009 058 772 A1 ist ein Assistenzsystem mit einer autostereoskopischen Darstellung bekannt.

Aus der JP 3 045625 B2 ist ein Schiff mit GPS, Gyroskop, Radar, Kamera, Echolot, Sonar und Datenbank für Karteninformationen bekannt.

Aus der EP 2 070 068 A2 ist ein System mit einem Subsystem zur Informationsbeschaffung für Objekte unter der Oberfläche und einem Subsystem zur Informationsbeschaffung für Objekte über der Oberfläche und Mittel zur Kombination dieser bekannt.

Aus der US 7 099 755 B2 ist eine zentrale Steuereinrichtung für ein bewaffnetes Schiff bekannt.

Aus der US 2007/244642 A1 ist ein Schiff mit einem Kontrollraum mit einem Panoramadisplay zur realistischen Wiedergabe bekannt.

Aus der US 6 466 891 B1 ist eine Vorrichtung zur Anzeige eines wahrscheinlichen Aufenthaltsortes eines Zieles bekannt.

Aus der US 7 143 363 B1 ist eine Methode zur Anzeige von Informationen auf einem Kriegsschiff bekannt.

Die Soltan P et al: "Improved second-generation 3-D volumetric display system", 1. Oktober 1998 (1998-10-01), XP001090923, Seiten 1-268 beschäftigt sich mit der Verwendung von 3D Displays im Marinebereich.

Aus der US 2011/025684 A1 ist eine Methode zur Anzeige von taktischen Unterwasserdaten bekannt.

Aus Louis Cacetta et al: "Effective Algorithms for a Class of Discrete Valued Optimal Control Problems" in: "Optimization and Cooperative Control Strategies", 1. Januar 2009 (2009-01-01), Springer-Verlag Berlin Heidelberg, XP055467653, Seiten 1-30 sind Verfahren zur optimalen Wegfindung bekannt.

Aus der US 2005/261844 A1 ist ein Verfahren zur Routenplanung bekannt.

Aus der US 2012/290200 A1 ist eine elektronische Vorrichtung für ein Schiff bekannt.

Aufgabe der Erfindung ist es, die Datenerfassung für die kommandierende Person zu vereinfachen und dadurch zu beschleunigen.

Gelöst wird diese Aufgabe durch Vorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung dient zur integrierten Darstellung von Information auf einem Wasserfahrzeug. Die Information ist aus mehreren Informationskategorien gebildet, wobei eine erste Informationskategorie aus kartografischen Informationselementen gebildet wird, eine zweite Informationskategorie aus Sonarinformationselementen gebildet wird und eine dritte Informationskategorie aus Schiffsinformationselementen gebildet wird. Die Vorrichtung weist wenigstens ein erstes Mittel zur Datenerfassung, ein erstes Mittel zur Datenverarbeitung und wenigstens ein erstes Darstellungsmittel auf. Das wenigstens eine erste Mittel zur Datenerfassung weist wenigstens eine erste Schnittstelle zum Sonarsystem, wenigstens eine zweite Schnittstelle zum Schiffssystem und wenigstens eine dritte Schnittstelle zur Schiffsdatenbank auf. Die kartografischen Informationselemente sind über die dritte Schnittstelle erfassbar. Die Sonarinformationselemente sind über die erste Schnittstelle erfassbar. Die Schiffsinformationselemente sind durch die zweite Schnittstelle erfassbar. Das wenigstens eine erste Mittel zur Datenverarbeitung ist zur Korrelation der ersten Informationskategorie, der zweiten Informationskategorie und der dritten Informationskategorie ausgebildet. Das wenigstens eine erste Darstellungsmittel ist zur Darstellung der durch Korrelation der Informationskategorien erhaltenen Information ausgebildet. Das wenigstens eine erste Mittel zur Datenverarbeitung ist zur Durchführung eines Verfahrens zur Berechnung einer Route für ein Wasserfahrzeug ausgebildet. Das wenigstens eine erste Mittel ist zur Datenverarbeitung zur Berechnung einer ortsabhängigen Detektionswahrscheinlichkeit in Abhängigkeit von den Sonarinformationselementen und den Schiffsinformationselementen ausgebildet. Schiffsposition, Batteriezustand und Menge an vorhandenem Treibstoff sind Schiffsinformationselemente. Für die Berechnung der Route wird eine Reichweite des Wasserfahrzeugs in Abhängigkeit von dem Batteriezustand und der Menge an vorhandenem Treibstoff bestimmt. Zur Berechnung der Route werden weitere Fluidfahrzeuge mittels Sonarempfängers gesucht. Zur Berechnung der Route werden Information über Position und Art eines weiteren Fluidfahrzeugs durch eine Auswertung der mit den Sonarempfängern empfangenen Daten beschafft. Zur Berechnung der Route wird aus einer maximalen Detektionswahrscheinlichkeit und einer Detektionsreichweite des weiteren Fluidfahrzeugs ein minimaler Abstand zum weiteren Fluidfahrzeug berechnet.

Durch die Korrelation werden die einzelnen Informationselemente in Relation zueinander gestellt und in dieser Relation grafisch wiedergegeben, sodass eine einfache gemeinsame kognitive Erfassung möglich ist.

Es kann vorgesehen sein, dass die Schiffsdatenbank situationsabhängig weitere Daten über eine Verbindung zu einer weiteren Datenbank von dieser weiteren Datenbank anfordert bzw. empfängt. Hierbei kann es sich beispielsweise um Daten einer aktuellen Wetterprognose oder um Daten über weitere Fluidfahrzeuge handeln.

In einer weiteren Ausführungsform der Erfindung ist das wenigstens eine erste Darstellungsmittel ein horizontal angeordnetes autostereoskopisches Display. Die Darstellung der durch Korrelation erhaltenen gesamten Information mittels des ersten Darstellungsmittels erfordert eine Darstellung, welche eine Wahrnehmung ermöglicht. Es ist besonders vorteilhaft, wenn die Darstellung der Information als dreidimensionale Darstellung erfolgt. Um einen sicheren und effizienten Einsatz auf einem Wasserfahrzeug zu gewährleisten, ist der Verzicht auf zusätzliche technische Hilfsmittel zur dreidimensionalen Darstellung, zum Beispiel Brillen mit Farb- oder Polfilter, Brille mit zeitlichem Verschließen der Durchsicht, sinnvoll. Dadurch kann ohne erst ein solches technisches Hilfsmittel aufzusetzen die Information erfasst werden. Hierzu kommt, dass eine variable Anzahl an Personen so die Information wahrnehmen kann. Als weiterer Vorteil ergibt sich, dass bei der Verwendung eines technischen Hilfsmittels dieses bei Schockeinwirkung verloren gehen kann oder beschädigt werden kann. Dieses könnte insbesondere im Gefechtsfall dazu führen, dass die Information nicht mehr wahrnehmbar wäre. Daher ist die Verwendung eines autostereoskopischen Displays vorteilhaft.

Die horizontale Anordnung kommt den Gewohnheiten der Verwendung eines konventionellen Kartentisches nahe und ist somit in die üblichen Abläufe auf einem Wasserfahrzeug gut zu integrieren.

In einer weiteren Ausführungsform der Erfindung weist das autostereoskopische Display eine Vielzahl von optischen Linsen auf. Insbesondere weist das autostereoskopische Display eine Matrix sphärischer Linsen oder halbkugelförmiger Linsen zur Realisierung auf. Unter einer Linse sind vorteilhafterweise wenigstens n x m Pixel zur Erzeugung von n Teilbildern angeordnet, welche durch die optische Linse jeweils in unterschiedliche Raumrichtungen projiziert werden, wobei n und m natürliche Zahlen sind. Jeweils benachbarte Teilbilder dienen zur Erzeugung der autostereoskopischen Darstellung und sind üblicherweise so ausgelegt, dass diese Teilbilder im üblichen Betrachtungsabstand (beispielsweise 50 cm bis 2 m in Abhängigkeit insbesondere von der Größe des Displays) eine Entfernung des mittleren Augenabstands (~ 5 cm) einer Person aufweisen.

In einer weiteren Ausführungsform der Erfindung weist das autostereoskopisches Display eine lentikulare Struktur auf, insbesondere linienförmig nebeneinander angeordnete plano-konvexe zylindrische Linsen, das heißt so genannten "Lentikulars". Diese Displays lassen sich vergleichsweise gut herstellen, da die Pixel üblicherweise auch eine rasterförmige rechtwinklige Anordnung aufweisen.

In einer weiteren Ausführungsform der Erfindung weist das autostereoskopisches Display eine Vielzahl von asphärischen optische Linsen auf, wobei die asphärischen Linsen zur gleichzeitigen Betrachtung des Displays durch stehende Personen von wenigstens drei Seiten ausgebildet ist. Ist das autostereoskopische Display rechteckig ausgeführt, so können Personen an verschiedenen Seiten stehen. Hierdurch ergibt sich die Anforderung, dass Teilbilder in verschiedene Raumrichtungen projiziert werden müssen. Gleichzeitig führt die unterschiedliche Seitenlänge zu unterschiedlichen Betrachtungsabständen, welche insbesondere bei der Betrachtung von der kurzen Seite aus am Stärksten ausfallen. Es ist daher sinnvoll, die Linsen so auszulegen, dass die Projektion auf das Seitenverhältnis des Displays optimiert wird und somit die Linsen von einer sphärischen Form abweichen. Die genaue Form der asphärischen Linsen ergibt sich aus einfachen geometrischen Überlegungen in Abhängigkeit vom Pixelabstand und den Ausmaßen des Displays.

In einer weiteren Ausführungsform der Erfindung sind die optischen Linsen hexagonal angeordnet. Eine hexagonale Anordnung ist vorteilhaft, auch in Hinblick auf die Pixelstrukturierung des Displays.

In einer weiteren Ausführungsform der Erfindung ist die Korrelation der Informationskategorien eine räumliche Korrelation. Die Information weist kartografische Informationselemente, Sonarinformationselemente und Schiffsinformationselemente auf. Zu den Schiffsinformationselementen zählt insbesondere die Schiffsposition, zu den Sonarinformationselementen insbesondere die Position aller Sonarkontakte. Diese Positionen sollen an den korrekten Positionen innerhalb der kartografischen Darstellung wiedergegeben werden. Hierzu erfolgt die räumliche Korrelation zwischen den Informationselementen.

In einer weiteren Ausführungsform der Erfindung wird eine vierte Informationskategorie aus Vorhersageinformationselementen gebildet, wobei das wenigstens eine erste Mittel zur Datenverarbeitung zur Vorhersage zukünftiger Sonarinformationselemente ausgebildet ist. Zur Vorhersage zukünftiger Sonarinformationselemente wird insbesondere Geschwindigkeit und Fahrtrichtung der Sonarkontakte verwendet. Besonders bevorzugt wird auch der zeitliche Verlauf von Geschwindigkeit und Fahrtrichtung der Sonarkontakte für die Vorhersage verwendet. Hierbei können die Vorhersageinformationselemente auch als z.B. keulenförmige Wahrscheinlichkeitsverteilung vorhergesagt werden.

Erfindungsgemäß ist das wenigstens eine erste Mittel zur Datenverarbeitung zur Durchführung eines Verfahrens zur Berechnung einer Route für ein Wasserfahrzeug ausgebildet.

Das Verfahren zur Berechnung einer Route für ein Wasserfahrzeug umfasst die Schritte:
a) Ermitteln der Randparameter und
b) Ermitteln der optimalen Route.

Die in Schritt a) erfolgende Ermittlung der Randparameter umfasst die Schritte:
a1) Definieren eines Einsatzprofils,
a2) Definieren einer Zielposition,
a3) Erfassen der eigenen Position,
a4) Beschaffung Umgebungsinformationen,
a5) Beschaffung Eigeninformationen,
a6) Beschaffung statischer Fremdinformationen.

Die Schritte a1) bis a6) können in beliebiger Reihenfolge durchgeführt werden und hierbei zeitlich überlappen. Diese Schritte können auch in zeitlich getrennten Teilschritten oder wiederholt durchgeführt werden.

In Schritt a4) werden dreidimensionale Umgebungsinformationen beschafft. Es können bevorzugt statische dreidimensionale Umgebungsinformationen beschafft werden. Ein Beispiel für statische dreidimensionale Umgebungsinformationen sind Seekarten mit Höhen/Tiefen-Profil. In Schritt a4) werden zusätzlich auch dynamische Umgebungsinformationen erfasst, wobei als dynamische Umgebungsinformationen mittels eines Sensors weitere Fluidfahrzeuge gesucht werden. Die dynamischen Umgebungsinformationen werden mittels Sonar, insbesondere Passivsonar oder Aktivsonar, erfasst. Die dynamische Umgebungsinformation kann zusätzlich mittels Radar erfasst werden.

Bei der Suche nach weiteren Fluidfahrzeugen muss es nicht immer zu einer Detektion kommen, da nicht immer weitere Fluidfahrzeuge in der Detektionsreichweite des Wasserfahrzeugs sind.

Schritt b) umfasst die folgenden Schritte:
b1) Bestimmen nicht zu durchquerender Bereiche aus den in Schritt a4) dreidimensionale Umgebungsinformationen,
b2) Bestimmen nicht zu durchquerender Bereiche aus den in Schritt a4) beschafften dynamischen Umgebungsinformationen in Korrelation mit sowohl den in Schritt a6) beschafften statischen Fremdinformationen sowie dem in Schritt a1) ausgewähltem Einsatzprofil,
b3) Bestimmen der Route unter Vermeidung der in den Schritten b1) und b2) bestimmten nicht zu durchquerenden Bereichen sowie von Routenparametern entsprechend dem in Schritt a1) definiertem Einsatzprofil.

In Schritt b1) werden somit Bereiche identifiziert, welche z.B. aufgrund von Untiefen oder Unterwassergebirgen nicht durchquert werden können. Hierbei ist neben den eigentlichen Bereichen selbst auch der notwendige Sicherheitsabstand, ggf. auch unter Berücksichtigung der Genauigkeit des Kartenmaterials, zu berücksichtigen. Zudem hängt dieser Sicherheitsabstand, der den nicht zu durchquerenden Bereich über das Hindernis hinaus vergrößert auch von der Größe und Wendigkeit des Wasserfahrzeugs ab.

In Schritt b2) werden weitere Bereiche identifiziert, die nicht durchquert werden können. Hierzu werden dynamische Umgebungsinformationen, insbesondere die Information über weitere Fluidfahrzeuge mit den statischen Fremdinformationen und dem Einsatzprofil korreliert, wobei die statischen Fremdinformationen beispielsweise und bevorzugt Informationen über die Eigenschaften eines weiteren Fluidfahrzeugs bezüglich Zugehörigkeit und Befähigung zur Auffindung von Fluidfahrzeugen umfassen.

Beispielsweise wird als weiteres Fluidfahrzeug ein Frachtschiff identifiziert, so kann ein Unterseeboot vergleichsweise nah an diesem vorbeifahren, da ein Frachtschiff im Regelfall nur geringe Mittel zu Ortung von Unterwasserfahrzeugen hat. Wird als weiteres Fluidfahrzeug ein Militärschiff identifiziert, so ist dessen Zugehörigkeit (zur eigenen Flotte, zu neutralen Staaten oder zur gegnerischen Flotte) ein entscheidender Parameter. Ein Militärschiff der eigenen Flotte kann das Wasserfahrzeug orten, ohne das eine Gefahr für das Wasserfahrzeug ausgeht. Bei einem Schiff der gegnerischen Flotte ist ein Abstand zu halten, der eine Ortung praktisch ausschließend, wobei die Informationen über (ggf. geschätzte) Fähigkeit zur Detektion des gegnerischen Militärschiffes zur Definition des nicht zu durchquerenden Bereichs verwendet wird. Bei einem neutralen Schiff kann ein Mittelweg gewählt werden, da eine Detektion vermieden werden soll, aber auch nicht unmittelbar einen Nachteil durch eine Detektion durch das neutrale Schiff darstellen würde.

Bei dieser Korrelation wird das definierte Einsatzprofil berücksichtigt. Ist das Einsatzprofil Schleichfahrt definiert, so ist eine Detektion vollständig auszuschließen. Wird als Einsatzprofil eine Transferfahrt, insbesondere eine Transferfahrt in Gewässern mit besonderen Regeln, definiert, so kann eine Detektion ggf. auch gewünscht sein. Letztes ist beispielsweise in hoch befahrenen Schifffahrtswegen für welche internationale Verträge gelten, z.B. den Bosporus, der Fall, um eine Kollision sowie einen Verstoß gegen die internationalen Verträge zu vermeiden.

In einer weiteren Ausführungsform des Verfahrens zur Berechnung einer Route für ein Wasserfahrzeug werden in Schritt a4) dynamische Umgebungsinformationen durch Kommunikation beschafft. Beispielsweise kann ein Überwasserschiff mit dem Wasserfahrzeug in Kommunikation stehen, wobei das Überwasserschiff insbesondere auch aktiv weitere Fluidfahrzeuge erfasst. Hierdurch kann dieses Überwasserschiff selbst vergleichsweise leicht durch weitere Fluidfahrzeuge geortet werden. Die gewonnenen Informationen über weitere Fluidfahrzeuge kann das Überwasserschiff an das Wasserfahrzeug kommunizieren. Hierdurch ist eine Bestimmung nicht zu durchquerender Bereiche in Schritt b2) sehr viel präziser möglich.

In einer weiteren Ausführungsform des Verfahrens zur Berechnung einer Route für ein Wasserfahrzeug umfassen die in Schritt a4) beschafften statischen dreidimensionalen Umgebungsinformationen auch bekannte fest installierte Sensoren. Ein Beispiel für solche Sensoren ist das amerikanische Sosus. Besonders bevorzugt werden diese Informationen mit in Schritt a6) beschafften Fremdinformationen über die Detektionseigenschaften der Sensoren in Schritt b1) korreliert, um die nicht zu durchquerenden Bereiche zu bestimmen.

In einer weiteren Ausführungsform des Verfahrens zur Berechnung einer Route für ein Wasserfahrzeug wird in Schritt a1) das Einsatzprofil ausgewählt aus der Gruppe umfassend Transferfahrt, Schleichfahrt, Aufnahme, Auftauchen, Abtauchen, Angriff, Flucht, Langzeittauchfahrt, Ausweichen.

Eine Transferfahrt erfolgt üblicherweise als Überwasserfahrt, wobei eine Detektion durch weitere Fluidfahrzeuge unbeachtlich ist. Hier erfolgt die Optimierung der Route regelmäßig nach ökonomischen Kriterien. Bei Schleichfahrt ist eine Detektion regelmäßig zu vermeiden, dieses hat Vorrang vor allen anderen Parametern, ggf. mit Ausnahme der Reichweite im getauchten Zustand. Bei Langzeittauchfahrt ist insbesondere der Energieverbrauch zu berücksichtigen, um mit den vorhandenen Ressourcen möglichst lange getaucht zu bleiben, beispielsweise um in einem Gebiet möglichst lange getaucht Überwachungsaufgaben wahrzunehmen.

In einer weiteren Ausführungsform des Verfahrens zur Berechnung einer Route für ein Wasserfahrzeug wird aufgrund des ausgewählten Einsatzprofils eine maximale Detektionswahrscheinlichkeit bestimmt. Hierbei variiert die tolerierbare maximale Detektionswahrscheinlichkeit zwischen 0 % bei Schleichfahrt und 100 % bei Transferfahrt. Die Detektionswahrscheinlichkeit kann bei verschiedenen Einsatzprofilen auch eine Abhängigkeit der Zugehörigkeit des weiteren Fluidfahrzeugs aufweisen.

Erfindungsgemäß werden zur Berechnung einer Route für ein Wasserfahrzeug in Schritt a4) weitere Fluidfahrzeuge mittels Sonarempfängers gesucht. Besonders bevorzugt wird mittels passiven Sonar gesucht. Alternativ oder zusätzlich kann ein Hilfsfluidfahrzeug, dessen Position dem Wasserfahrzeug bekannt ist, Sonarimpulse aussenden, welche dann durch den Sensor des Wasserfahrzeugs erfasst und ausgewertet werden können. Dieses Verfahren eignet sich insbesondere, wenn das Wasserfahrzeug mit einem Überwasserschiff als Hilfsfluidfahrzeug oder einem unbemannten Hilfsfluidfahrzeug kooperiert.

Erfindungsgemäß werden zur Berechnung einer Route für ein Wasserfahrzeug in Schritt a4) Information über Position und Art weiterer Fluidfahrzeuge beschafft. Beispielsweise erfolgt die Beschaffung dieser Informationen durch die Auswertung der mit dem Passivsonar empfangenen Daten. Über die Geräuschsignatur lässt sich beispielsweise die Art der weiteren Fluidfahrzeuge identifizieren, soweit man über die hierfür notwendigen statischen Fremdinformationen verfügt, oder wenigstens durch Extrapolation und Vergleich abschätzen. So weisen Schiffsschrauben von zivilen Frachtschiffen regelmäßig eine auf Verbrauch optimierte Form auf, von Sportboote eine auf Geschwindigkeit optimierte Form und von Militärschiffe eine auf Geräuschentwicklung und Geschwindigkeit optimierte Form. Ebenfalls ist die Geräuschemission beispielsweise auch von dessen Bauform und Größe abhängig, sodass eine Einschätzung der Fähigkeiten auch ohne genaue Identifikation in gewissen Rahmen möglich ist.

In einer weiteren Ausführungsform des Verfahrens zur Berechnung einer Route für ein Wasserfahrzeug wird in Schritt b2) als statische Fremdinformation die Detektionsreichweite aufgrund der in Schritt a2) ermittelten Art des weiteren Fluidfahrzeugs beschafft. Können keine konkreten Daten beschafft werden, so kann analog der Beschaffung der Information über die Art des weiteren Fluidfahrzeugs auch dessen Detektionsreichweite aus den bekannten Fluidfahrzeugen extrapoliert werden.

Erfindungsgemäß wird zur Berechnung einer Route für ein Wasserfahrzeug aus der maximalen Detektionswahrscheinlichkeit und der Detektionsreichweite des weiteren Fluidfahrzeugs der minimale Abstand zum weiteren Fluidfahrzeug berechnet. Dieses stellt ein Beispiel für eine Korrelation der beschafften dynamischen Umgebungsinformationen mit sowohl den beschafften statischen Fremdinformationen sowie dem ausgewählten Einsatzprofil dar.

Erfindungsgemäß werden zur Berechnung einer Route für ein Wasserfahrzeug in Schritt a5) 2. dynamische Eigeninformationen zur Bestimmung der Reichweite des Wasserfahrzeugs beschafft. Erfindungsgemäß werden in Schritt a5) Informationen zum Batteriestand und die Menge an vorhandenem Treibstoff beschafft. Hierbei kann es sich auch um die Menge von mehr als einem Treibstoff handeln, zum Beispiel um die Menge an Diesel für einen Dieselantrieb und die Menge an Wasserstoff für eine Brennstoffzelle.

In einer weiteren Ausführungsform des Verfahrens zur Berechnung einer Route für ein Wasserfahrzeug wird in Schritt a5) die maximale Reichweite des Wasserfahrzeugs in Abhängigkeit von verwendeter Antriebsart und Geschwindigkeit errechnet. Beispielsweise wird die maximale Reichweite für Fahrt mit hoher Geschwindigkeit im getauchten Zustand auf der Basis des Ladezustands der Batterie, ggf. mit Unterstützung durch eine Brennstoffzelle, die maximale Reichweite für Fahrt mit niedriger Geschwindigkeit im getauchten Zustand unter Verwendung der Brennstoffzelle sowie die maximale Reichweite mit Dieselantrieb im aufgetauchem Zustand errechnet.

In einer weiteren Ausführungsform des Verfahrens zur Berechnung einer Route für ein Wasserfahrzeug wird in Schritt a3) die eigene Position mittels Tiefenmesser, Geschwindigkeitsmesssystem, Laser-Gyroskop (Ringlaser), Kreiselkompass und/oder Satellitennavigation bestimmt. Insbesondere wird in Schritt a3) die Position in Relation zur letzten bekannten Position bestimmt. Ein Unterseeboot kann im getauchten Zustand die eigene Position oftmals nur relativ zur letzten aufgetauchten Position bestimmen, insbesondere mittels Tiefenmesser, Geschwindigkeitsmesssystem und Laser-Gyroskop bzw. Kreiselkompass. Die eigene Position kann beispielsweise auch relativ zu bekannten Landmarken erfolgen, wobei dieses jedoch zum einen nur geht, wenn diese im Einsatzgebiet vorhanden sind. Dieses kann beispielsweise im Ozean, wenn die maximale Tauchtiefe des Unterseebootes gering gegenüber der Tiefe des Gewässers ist, problematisch sein. Zum anderen setzt dieses die Bereitschaft zum Einsatz von zum Beispiel Aktivsonar voraus, was je nach Einsatzprofil nicht immer wünschenswert ist.

In einer weiteren Ausführungsform des Verfahrens zur Berechnung einer Route für ein Wasserfahrzeug wird die voraussichtliche Position weiterer Fluidfahrzeuge vorausgesagt und aus dieser voraussichtlichen Position erfolgt die Berechnung der nicht zu durchquerenden Bereiche in Abhängigkeit von der Zeit. Bei der Voraussage können auch Standartmanöver verwendet werden.

In einer weiteren bevorzugten Ausführungsform des Verfahrens zur Berechnung einer Route für ein Wasserfahrzeug wird eine Mehrzahl an voraussichtlichen Positionen für einen Zeitpunkt in der Zukunft vorausgesagt, wobei jeder voraussichtlichen Position eine Eintrittswahrscheinlichkeit zugeordnet wird. Hierdurch wird berücksichtigt, dass für weiter in der Zukunft liegende Zeitpunkte die Voraussagegenauigkeit abnimmt. Besonders bevorzugt wird bei der Berechnung der Detektionswahrscheinlich die Eintrittswahrscheinlichkeit berücksichtigt. Beispielsweise kann so ein Bereich als durchquerbar angesehen werden, wenn zwar in diesem Bereich die Wahrscheinlichkeit der Detektion sehr hoch wäre, wenn ein weiteres Fluidfahrzeug eine bestimmte Route nehmen wird, aber gleichzeitig diese bestimmte Route sehr unwahrscheinlich ist. Sollte sich zu einem späteren Zeitpunkt doch erweisen, dass das weitere Fluidfahrzeug diese unwahrscheinliche bestimmte Route wählt, so wird die eigene Route entsprechend des Verfahrens erneut angepasst.

In einer weiteren Ausführungsform des Verfahrens zur Berechnung einer Route für ein Wasserfahrzeug werden in Schritt a4) Wetterdaten und Wetterprognosedaten als dynamische Umgebungsinformationen beschafft.

In einer weiteren Ausführungsform des Verfahrens zur Berechnung einer Route für ein Wasserfahrzeug werden zur Bestimmen der optimalen Route in Schritt b3) Standartgefechtsmanöver berücksichtigt.

In einer weiteren Ausführungsform des Verfahrens zur Berechnung einer Route für ein Wasserfahrzeug werden in Schritt c) aus der in Schritt b3) berechneten Route Steuerdaten ermittelt. Bevorzugt werden die in Schritt c) ermittelten Steuerdaten an eine Ruderanlage übermittelt.

In einer weiteren Ausführungsform des Verfahrens zur Berechnung einer Route für ein Wasserfahrzeug wird ein Unterwasserfahrzeug als Wasserfahrzeug gewählt.

Das Verfahren zur Berechnung einer Route für ein Wasserfahrzeug wird besonders bevorzugt in kontinuierlicher Weise betrieben und die Route an die jeweils neu erfassten Informationen entsprechend angepasst.

In einer weiteren Ausführungsform der Erfindung wird eine fünfte Informationskategorie aus Eigenvorhersageinformationselementen gebildet, wobei das wenigstens eine erste Mittel zur Datenverarbeitung zur Vorhersage zukünftiger Schiffsinformationselemente ausgebildet ist. Hierzu gehören insbesondere die Vorhersage für Energie- und Treibstoffvorräte und somit Reichweite des Wasserfahrzeugs. Des Weiteren können zusätzliche Parameter wie zum Beispiel Atemluft und/oder Proviant gemäß anzunehmendem Verbrauch berücksichtigt werden.

Erfindungsgemäß ist das wenigstens eine erste Mittel zur Datenverarbeitung zur Berechnung der ortsabhängigen Detektionswahrscheinlichkeit in Abhängigkeit von Sonarinformationselementen und Schiffsinformationselementen ausgebildet. Die Detektionswahrscheinlichkeit hängt primär von drei Parametern ab. Der erste Parameter ist die Detektionsfähigkeit eines Sonarkontakts. Verschiedene Schiffe, Flugzeuge oder Sonarvorrichtungen verfügen über verschiedene Empfindlichkeiten. Je höher die Empfindlichkeit, umso größer ist die Detektionswahrscheinlichkeit. Der zweite Parameter ist die eigene Schallemission, welche insbesondere von der Geschwindigkeit und Antriebsart beeinflusst wird. Der dritte Parameter ist der Abstand. Aus diesen drei Parametern lässt sich die ortsabhängige Detektionswahrscheinlichkeit berechnen. Hierbei kann eine einfache Klassifizierung der ortsabhängigen Detektionswahrscheinlichkeit erfolgen, beispielsweise in die Kategorien "Detektion wahrscheinlich", "Detektion möglich" und "Detektion unwahrscheinlich".

Als vierter Parameter für die Bestimmung der Detektionswahrscheinlichkeit kann die lokale Schichtung des Wassers vorgesehen sein. So kann es in Abhängigkeit der Temperatur, Dichte und/oder dem Salzgehalt zu Schichten oder Strömungen kommen an deren Grenzen das Sonar reflektiert oder abgelenkt wird, so dass das Sonar durch die Grenzfläche in seiner Reichweite beschränkt wird, bzw. eine Detektionswahrscheinlichkeit hinter oder unterhalb der Grenzfläche geringer ist als vor oder oberhalb. Vorzugsweise sind Sensoren vorgesehen, mit denen die Eigenschaften des Wassers bestimmt wird.

Erfindungsgemäß sind Schiffsposition, Batteriezustand und Menge an vorhandenem Treibstoff Schiffsinformationselemente.

In einer weiteren Ausführungsform der Erfindung weist die Vorrichtung weitere Schnittstellen zur Erfassung weiterer Informationselemente weiterer Informationskategorien auf.

In einer weiteren Ausführungsform der Erfindung wird eine sechste Informationskategorie aus Eigeninformationselementen gebildet, wobei das wenigstens eine erste Mittel zur Datenerfassung wenigstens eine sechste Schnittstelle zum Schiffssystem aufweist. Die Eigeninformationselemente umfassen insbesondere Grad der Einsatzbereitschaft, Zustand der Waffensysteme und Schadensinformationen. Insbesondere können Eigeninformationselemente selektiv in die angezeigte Information integriert werden, vorteilhafter Weise in unmittelbarer Nähe der eigenen Position.

In einer weiteren Ausführungsform der Erfindung wird eine siebente Informationskategorie aus Fremdinformationselementen gebildet, wobei das wenigstens eine erste Mittel zur Datenerfassung wenigstens eine siebente Schnittstelle zur Schiffsdatenbank aufweist. Die Fremdinformationselemente umfassen offensive und defensive Fähigkeiten. Die Fremdinformationselemente sind Sonarinformationselementen zugeordnet. Insbesondere können Fremdinformationselemente selektiv in die angezeigte Information integriert werden, vorteilhafter Weise in unmittelbarer Nähe der Sonarkontakte.

In einer weiteren Ausführungsform der Erfindung ist das Wasserfahrzeug ein Unterfasserfahrzeug, insbesondere ein Unterseeboot. Diese Ausführungsform ist besonders bevorzugt, da ein Unterwasserfahrzeug, insbesondere ein Unterseeboot, die Möglichkeit hat, sich in allen drei Raumrichtungen zu bewegen. Zusätzlich kann die Detektionswahrscheinlichkeit hier auch durch die Eigenschaften des Schichtaufbaus des Wassers modifiziert sein, sodass die erfindungsgemäße Vorrichtung auf einem Unterwasserfahrzeug, insbesondere einem Unterseeboot, besonders vorteilhaft ist.

In einer ganz besonders bevorzugten Ausführungsform der Erfindung ist das Wasserfahrzeug ein militärisches Wasserfahrzeug. Bei militärischen Wasserfahrzeugen besteht gegenüber zivilen Wasserfahrzeugen regelmäßig die Notwendigkeit, nicht entdeckt zu werden. Zivile Wasserfahrzeuge geben hingegen ihre Position regelmäßig sogar aktiv an andere Verkehrsteilnehmer weiter.

Nachfolgend ist eine Vorrichtung anhand eines in den Zeichnungen dargestellten Ausführungsbeispiels näher erläutert.
- Fig. 1: Schematische Darstellung der Vorrichtung zur integrierten Darstellung von Information auf einem Wasserfahrzeug
- Fig. 2: Schematische Darstellung der Information
- Fig. 3: Schematischer Querschnitt eines autostereoskopischen Displays

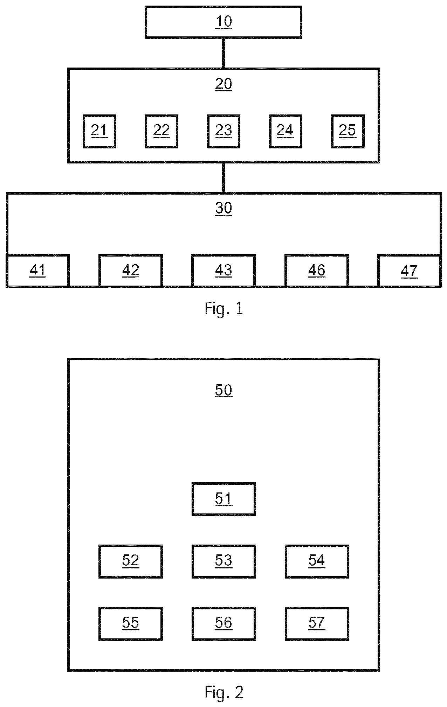

In Fig. 1 ist die Vorrichtung zur integrierten Darstellung von Information auf einem Wasserfahrzeug grob schematisch dargestellt. Die Vorrichtung weist Darstellungsmittel 10, Mittel zur Datenverarbeitung 20 sowie Mittel zur Datenerfassung 30 auf.

Die Mittel zur Datenverarbeitung 20 weisen Mittel zur Korrelation 21, Mittel zur Vorhersage 22, Mittel zur Routenberechnung 23, Mittel zur Eigenvorhersage 24 und Mittel zur Berechnung der Detektionswahrscheinlichkeit 25 auf.

Die Mittel zur Datenerfassung 30 weist eine erste Schnittstelle 41, eine zweite Schnittstelle 42, eine dritte Schnittstelle 43, eine sechste Schnittstelle 46 und eine siebente Schnittstelle 47 auf.

Über die dritte Schnittstelle 43 sind die kartografische Informationselemente 51, über die erste Schnittstelle 41 die Sonarinformationselemente 52, über die zweite Schnittstelle 42 die Schiffsinformationselemente 53, über die sechste Schnittstelle 46 die Eigeninformationselementen 56 und über die siebente Schnittstelle 47 die Fremdinformationselementen 57 erfassbar.

Fig. 2 zeigt die Information 50, welche kartografische Informationselemente 51, Sonarinformationselemente 52, Schiffsinformationselemente 53, Vorhersageinformationselemente 54, Eigenvorhersageinformationselemente 55, Eigeninformationselemente 56 und Fremdinformationselemente 57 aufweist.

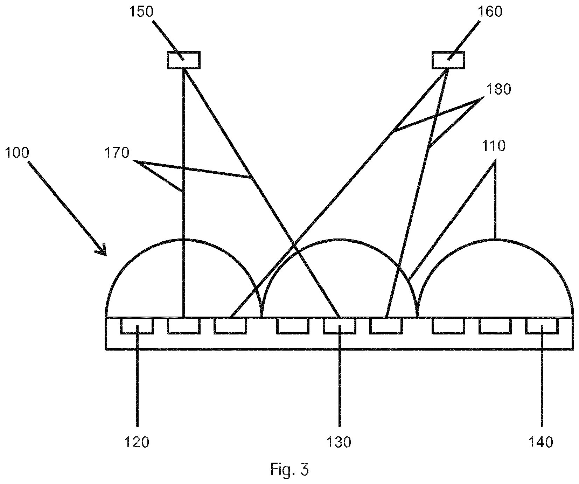

Die Fig. 3 ist nicht maßstabsgerecht und stellt daher eine starke Vereinfachung dar. Üblicherweise ist der Abstand zwischen den Augen 150, 160 und autostereoskopischen Display 100 größer als der Abstand der Augen 150, 160 voneinander und sehr viel größer als die Größe der Pixel 120, 130, 140 und der optischen Linsen 110.

Üblicherweise weist ein autostereoskopisches Display 100 drei bis über tausend Teilbilder, bevorzugt sieben bis 256 Teilbilder auf. Zur Vereinfachung sind hier nur drei Teilbilder dargestellt. Ein erstes Teilbild wird aus Pixeln für erstes Teilbild 120, ein zweites Teilbild aus Pixeln für ein zweites Teilbild 130 und ein drittes Teilbild aus Pixeln für ein drittes Teilbild 140 zusammengesetzt.

Durch die optischen Linsen 110 wird im gezeigten Fall das zweite Teilbild aus den Pixeln für das zweite Teilbild 130 auf das erste Auge 150 und das dritte Teilbild aus den Pixeln für das dritte Teilbild 140 auf das zweite Auge 160 projiziert. Die Strahlen zum ersten Auge 170 und die Strahlen zum zweiten Auge 180 sind skizzenhaft angegeben.

### Bezugszeichen

- 10: Darstellungsmittel
- 20: Mittel zur Datenverarbeitung
- 21: Mittel zur Korrelation
- 22: Mittel zur Vorhersage
- 23: Mittel zur Routenberechnung
- 24: Mittel zur Eigenvorhersage
- 25: Mittel zur Berechnung der Detektionswahrscheinlichkeit
- 30: Mittel zur Datenerfassung
- 41: erste Schnittstelle
- 42: zweite Schnittstelle
- 43: dritte Schnittstelle
- 46: sechste Schnittstelle
- 47: siebente Schnittstelle
- 50: Information
- 51: kartografische Informationselemente
- 52: Sonarinformationselemente
- 53: Schiffsinformationselemente
- 54: Vorhersageinformationselemente
- 55: Eigenvorhersageinformationselemente
- 56: Eigeninformationselemente
- 57: Fremdinformationselemente
- 100: autostereoskopisches Display
- 110: optische Linsen
- 120: Pixel für erstes Teilbild
- 130: Pixel für zweites Teilbild
- 140: Pixel für drittes Teilbild
- 150: erstes Auge
- 160: zweites Auge
- 170: Strahlen zum ersten Auge
- 180: Strahlen zum zweiten Auge

## Patentansprüche

1. Vorrichtung zur integrierten Darstellung von Information (50) auf einem Wasserfahrzeug, wobei die Information (50) aus mehreren Informationskategorien gebildet ist, wobei eine erste Informationskategorie aus kartografischen Informationselementen (51) gebildet wird,
wobei eine zweite Informationskategorie aus Sonarinformationselementen (52) gebildet wird, wobei eine dritte Informationskategorie aus Schiffsinformationselementen (53) gebildet wird, wobei die Vorrichtung wenigstens ein erstes Mittel zur Datenerfassung aufweist, wobei die Vorrichtung wenigstens ein erstes Mittel zur Datenverarbeitung (20) aufweist, wobei die Vorrichtung wenigstens ein erstes Darstellungsmittel (10) aufweist, wobei das wenigstens eine erste Mittel zur Datenerfassung wenigstens eine erste Schnittstelle (41) zum Sonarsystem aufweist, wobei das wenigstens eine erste Mittel zur Datenerfassung wenigstens eine zweite Schnittstelle (42) zum Schiffssystem aufweist, wobei das wenigstens eine erste Mittel zur Datenerfassung wenigstens eine dritte Schnittstelle (43) zur Schiffsdatenbank aufweist, wobei die kartografischen Informationselemente (51) über die dritte Schnittstelle (43) erfassbar sind, wobei die Sonarinformationselemente (52) über die erste Schnittstelle (41) erfassbar sind, wobei die Schiffsinformationselemente (53) durch die zweite Schnittstelle (42) erfassbar sind, wobei das wenigstens eine erste Mittel zur Datenverarbeitung (20) zur Korrelation der ersten Informationskategorie, der zweiten Informationskategorie und der dritten Informationskategorie ausgebildet ist, wobei das wenigstens eine erste Darstellungsmittel (10) zur Darstellung der durch Korrelation der Informationskategorien erhaltenen Information (50) ausgebildet ist, wobei das wenigstens eine erste Mittel zur Datenverarbeitung zur Durchführung eines Verfahrens zur Berechnung einer Route für ein Wasserfahrzeug ausgebildet ist;
**dadurch gekennzeichnet, dass**
das wenigstens eine erste Mittel zur Datenverarbeitung (20) zur Berechnung einer ortsabhängigen Detektionswahrscheinlichkeit in Abhängigkeit von den 2. Sonarinformationselementen (52) und den Schiffsinformationselementen (53) ausgebildet ist, wobei Schiffsposition, Batteriezustand und Menge an vorhandenem Treibstoff Schiffsinformationselemente (53) sind, wobei für die Berechnung der Route eine Reichweite des Wasserfahrzeugs in Abhängigkeit von dem Batteriezustand und der Menge an vorhandenem Treibstoff bestimmt wird, wobei zur Berechnung der Route weitere Fluidfahrzeuge mittels Sonarempfängers gesucht werden, wobei zur Berechnung der Route Information über Position und Art eines weiteren Fluidfahrzeugs durch eine Auswertung der mit den Sonarempfängern empfangenen Daten beschafft werden, wobei zur Berechnung der Route aus einer maximalen Detektionswahrscheinlichkeit und einer Detektionsreichweite des weiteren Fluidfahrzeugs ein minimaler Abstand zum weiteren Fluidfahrzeug berechnet wird.

2. Vorrichtung nach Anspruch 1, **dadurch gekennzeichnet, dass** das wenigstens eine erste Darstellungsmittel (10) ein horizontal angeordnetes autostereoskopisches Display (100) ist.

3. Vorrichtung nach einem der vorstehenden Ansprüche, **dadurch gekennzeichnet, dass** die Korrelation der Informationskategorien eine räumliche Korrelation ist.

4. Vorrichtung nach einem der vorstehenden Ansprüche, **dadurch gekennzeichnet, dass** eine vierte Informationskategorie aus Vorhersageinformationselementen (54) gebildet wird, wobei das wenigstens eine erste Mittel zur Datenverarbeitung (20) zur Vorhersage zukünftiger Sonarinformationselemente (52) ausgebildet ist.

5. Vorrichtung nach einem der vorstehenden Ansprüche, **dadurch gekennzeichnet, dass** eine fünfte Informationskategorie aus Eigenvorhersageinformationselementen (55) gebildet wird, wobei das wenigstens eine erste Mittel zur Datenverarbeitung (20) zur Vorhersage zukünftiger Schiffsinformationselemente (53) ausgebildet ist.

6. Vorrichtung nach einem der vorstehenden Ansprüche, **dadurch gekennzeichnet, dass** die Vorrichtung weitere Schnittstellen zur Erfassung weiterer Informationselemente weiterer Informationskategorien aufweist.

7. Vorrichtung nach einem der vorstehenden Ansprüche, **dadurch gekennzeichnet, dass** eine sechste Informationskategorie aus Eigeninformationselementen (56) gebildet wird, wobei das wenigstens eine erste Mittel zur Datenerfassung wenigstens eine sechste Schnittstelle (46) zum Schiffssystem aufweist, wobei die Eigeninformationselemente (56) insbesondere Grad der Einsatzbereitschaft, Zustand der Waffensysteme und Schadensinformationen umfassen.

8. Vorrichtung nach einem der vorstehenden Ansprüche, **dadurch gekennzeichnet, dass** eine siebente Informationskategorie aus Fremdinformationselementen (57) gebildet wird, wobei das wenigstens eine erste Mittel zur Datenerfassung wenigstens eine siebente Schnittstelle (47) zur Schiffsdatenbank aufweist, wobei die Fremdinformationselemente (57) offensive und defensive Fähigkeiten umfassen und wobei die Fremdinformationselemente (57) Sonarinformationselementen (52) zugeordnet sind.

9. Vorrichtung nach einem der vorstehenden Ansprüche, **dadurch gekennzeichnet, dass** das Wasserfahrzeug ein Unterfasserfahrzeug, insbesondere ein Unterseeboot, ist.

## Claims

1. Device for the integrated display of information (50) on a watercraft, wherein the information (50) is formed from multiple information categories, wherein a first information category is formed from cartographic information elements (51), wherein a second information category is formed from sonar information elements (52), wherein a third information category is formed from ship information elements (53), wherein the device comprises at least one first means for data acquisition, wherein the device comprises at least one first means for data processing (20), wherein the device comprises at least one first display means (10), wherein the at least one first means for data acquisition comprises at least one first interface (41) to the sonar system, wherein the at least one first means for data acquisition comprises at least one second interface (42) to the ship system, wherein the at least one first means for data acquisition comprises at least one third interface (43) to the ship database, wherein the cartographic information elements (51) can be acquired via the third interface (43), wherein the sonar information elements (52) can be acquired via the first interface (41), wherein the ship information elements (53) can be acquired by way of the second interface (42), wherein the at least one first means for data processing (20) is designed for correlation of the first information category, the second information category, and the third information category, wherein the at least one first display means (10) is designed to display the information (50) obtained by correlation of the information categories, wherein the at least one first means for data processing is designed to carry out a method for computing a route for a watercraft; **characterized in that** the at least one first means for data processing (20) is designed to compute a location-dependent detection probability as a function of the sonar information elements (52) and the ship information elements (53), wherein ship position, battery level, and quantity of available fuel are ship information elements (53), wherein, for the computation of the route, a range of the watercraft is determined as a function of the battery level and the quantity of available fuel, wherein, for the computation of the route, further fluid vehicles are searched for using the sonar receiver, wherein, for the computation of the route, information relating to the position and type of a further fluid vehicle is obtained by evaluating the data received using the sonar receivers, wherein, for the computation of the route, a minimum distance to the further fluid vehicle is computed from a maximum detection probability and a detection range of the further fluid vehicle.

2. Device according to Claim 1, **characterized in that** the at least one first display means (10) is a horizontally arranged autostereoscopic display (100) .

3. Device according to any one of the preceding claims, **characterized in that** the correlation of the information categories is a spatial correlation.

4. Device according to any one of the preceding claims, **characterized in that** a fourth information category is formed from prediction information elements (54), wherein the at least one first means for data processing (20) is designed to predict future sonar information elements (52).

5. Device according to any one of the preceding claims, **characterized in that** a fifth information category is formed from ego prediction information elements (55), wherein the at least one first means for data processing (20) is designed to predict future ship information elements (53).

6. Device according to any one of the preceding claims, **characterized in that** the device comprises further interfaces for acquiring further information elements of further information categories.

7. Device according to any one of the preceding claims, **characterized in that** a sixth information category is formed from ego information elements (56), wherein the at least one first means for data acquisition comprises at least one sixth interface (46) to the ship system, wherein the ego information elements (56) comprise in particular degree of operational readiness, status of the weapon systems, and items of damage information.

8. Device according to any one of the preceding claims, **characterized in that** a seventh information category is formed from external information elements (57), wherein the at least one first means for data acquisition comprises at least one seventh interface (47) to the ship database, wherein the external information elements (57) comprise offensive and defensive capabilities, and wherein the external information elements (57) are associated with sonar information elements (52).

9. Device according to any one of the preceding claims, **characterized in that** the watercraft is an underwater craft, in particular a submarine.

## Revendications

1. Dispositif de représentation intégrée d'informations (50) à bord d'une embarcation,
les informations (50) étant formées par plusieurs catégories d'information, une première catégorie d'information étant formée par des éléments d'information cartographique (51), une deuxième catégorie d'information étant formée par des éléments d'information de sonar (52), une troisième catégorie d'information étant formée par des éléments d'information de navire (53), le dispositif présentant au moins un premier moyen d'acquisition de données, le dispositif présentant au moins un premier moyen de traitement de données (20), le dispositif présentant au moins un premier moyen de représentation (10), ledit au moins un premier moyen d'acquisition de données présentant au moins une première interface (41) avec le système de sonar, ledit au moins un premier moyen d'acquisition de données présentant au moins une deuxième interface (42) avec le système de navire, ledit au moins un premier moyen d'acquisition de données présentant au moins une troisième interface (43) avec la base de données du navire, les éléments d'information cartographique (51) pouvant être acquis par l'intermédiaire de la troisième interface (43), les éléments d'information de sonar (52) pouvant être acquis par l'intermédiaire de la première interface (41), les éléments d'information de navire (53) pouvant être acquis par l'intermédiaire de la deuxième interface (42), ledit au moins un premier moyen de traitement de données (20) étant réalisé pour mettre en corrélation la première catégorie d'information, la deuxième catégorie d'information et la troisième catégorie d'information, ledit au moins un premier moyen de représentation (10) étant réalisé pour représenter les informations (50) obtenues par la mise en corrélation des catégories d'information, ledit au moins un premier moyen de traitement de données étant réalisé pour effectuer un procédé de calcul d'un itinéraire pour une embarcation ;
**caractérisé en ce que** ledit au moins un premier moyen de traitement de données (20) est réalisé pour calculer une probabilité de détection dépendante du lieu en fonction des éléments d'information de sonar (52) et des éléments d'information de navire (53), la position du navire, l'état de la batterie et la quantité de combustible étant des éléments d'information de navire (53), dans lequel, pour le calcul de l'itinéraire, une autonomie de l'embarcation est déterminée en fonction de l'état de la batterie et de la quantité de combustible disponible, dans lequel, pour le calcul de l'itinéraire, d'autres véhicules à fluide sont recherchés au moyen de récepteurs de sonar, dans lequel, pour le calcul de l'itinéraire, des informations concernant la position et le type d'un autre véhicule à fluide sont obtenues par une évaluation des données reçues par les récepteurs de sonar, dans lequel, pour le calcul de l'itinéraire, à partir d'une probabilité de détection maximale et d'une portée de détection de l'autre véhicule à fluide, une distance minimale par rapport à l'autre véhicule à fluide est calculée.

2. Dispositif selon la revendication 1, **caractérisé en ce que** ledit au moins un premier moyen de représentation (10) est un écran (100) auto-stéréoscopique disposé horizontalement.

3. Dispositif selon l'une quelconque des revendications précédentes, **caractérisé en ce que** la mise en corrélation des catégories d'information est une mise en corrélation spatiale.

4. Dispositif selon l'une quelconque des revendications précédentes, **caractérisé en ce qu'**une quatrième catégorie d'information est formée par des éléments d'information prévisionnels (54), ledit au moins un premier moyen de traitement de données (20) étant réalisé pour prédire des éléments d'information de sonar futurs (52).

5. Dispositif selon l'une quelconque des revendications précédentes, **caractérisé en ce qu'**une cinquième catégorie d'information est formée par des éléments d'information prévisionnels propres (55), ledit au moins un premier moyen de traitement de données (20) étant réalisé pour prédire des éléments d'information de navire futurs (53).

6. Dispositif selon l'une quelconque des revendications précédentes, **caractérisé en ce que** le dispositif présente d'autres interfaces pour détecter d'autres éléments d'information d'autres catégories d'information.

7. Dispositif selon l'une quelconque des revendications précédentes, **caractérisé en ce qu'**une sixième catégorie d'information est formée par des éléments d'information propres (56), ledit au moins un premier moyen d'acquisition de données présentant au moins une sixième interface (46) avec le système de navire, les éléments d'information propres (56) comprenant en particulier le degré de disponibilité opérationnelle, l'état du système d'armes et des informations sur les dégâts.

8. Dispositif selon l'une quelconque des revendications précédentes, **caractérisé en ce qu'**une septième catégorie d'information est formée par des éléments d'information externes (57), ledit au moins un premier moyen d'acquisition de données comprenant au moins une septième interface (47) avec la base de données du navire, les éléments d'information externes (57) comprenant des capacités offensives et défensives, et les éléments d'information externes (57) étant associés à des éléments d'information de sonar (52).

9. Dispositif selon l'une quelconque des revendications précédentes, **caractérisé en ce que** l'embarcation est un submersible, en particulier un sous-marin.
